# EUROPÄISCHE PATENTANMELDUNG

(11) **EP 2 221 565 A2**
(43) Veröffentlichungstag der Anmeldung: **25.08.2010**
(21) Anmeldenummer: 10001856.3
(22) Anmeldetag: 23.02.2010
(51) Int. Cl.: F25D 29/00, G01K 11/12

(54) **Kühl- und/oder Gefriergerät**

(30) Priorität: 23.02.2009 DE 202009002557 U; 29.04.2009 DE 202009006296 U
(71) Anmelder: Liebherr-Hausgeräte Ochsenhausen GmbH, 88416 Ochsenhausen (DE)
(72) Erfinder: Jendrusch, Holger, Dipl.-Ing. (FH), 88430 Rot a.d. Rot (DE); Wiest, Matthias, 88416 Hattenburg (DE); Werne, Markus, 89257 Illertissen (DE); Hoermann, Birgit, Dipl. Wirt-Ing. (FH), 88416 Ochsenhausen (DE)
(74) Vertreter: Herrmann, Uwe

(57) **Zusammenfassung**

Die vorliegende Erfindung betrifft ein Kühl- und/oder Gefriergerät mit einem oder mehreren Kompartimenten zur Aufnahme von Kühl- oder Gefriergut, wobei wenigstens ein Temperatursensor vorgesehen ist, mittels dessen die Temperatur in dem wenigstens einen Kompartiment erfaßt wird, wobei wenigstens ein Leuchtmittel vorgesehen ist, das mit dem wenigstens einen Temperatursensor derart unmittelbar oder mittelbar miteinander in Verbindung steht, dass das Leuchtmittel Licht in einer Farbe abgibt, die von der durch den wenigstens einen Temperatursensor erfaßte Temperatur abhängig ist.

## Beschreibung

Die vorliegende Erfindung betrifft ein Kühl- und/oder Gefriergerät mit einem oder mehreren Kompartimenten zur Aufnahme von Kühl- oder Gefriergut, wobei wenigstens ein Temperatursensor vorgesehen ist, mittels dessen die Temperatur in dem wenigstens einen Kompartiment erfaßt wird.

Bei aus dem Stand der Technik bekannten Kältegeräten ist es bekannt, dass der Nutzer über die Position eines Stellrades zur Temperatureinstellung oder über ein Display den Soll- bzw. den Istwert der in dem Kompartiment, beispielsweise in dem Kühlteil herrschenden Temperatur ablesen kann.

Der vorliegenden Erfindung liegt die Aufgabe zugrunde, ein Kühl- und/oder Gefriergerät der eingangs genannten Art dahingehend weiterzubilden, dass für den Benutzer besonders schnell und einfach erkennbar ist, welche Temperatur in dem Gerät herrscht.

Diese Aufgabe wird durch ein Kühl- und/oder Gefriergerät mit den Merkmalen des Anspruchs 1 gelöst. Danach ist vorgesehen, dass wenigstens ein Leuchtmittel vorgesehen ist, das mit dem wenigstens einen Temperatursensor derart unmittelbar oder mittelbar miteinander in Verbindung steht, dass das Leuchtmittel Licht in einer Farbe abgibt, die vor dem durch den wenigstens einen Temperatursensor erfaßte Temperatur abhängig ist. Vorzugsweise ist die Farbe für den Temperaturwert charakteristisch. Der Nutzer des Gerätes kann somit sofort anhand der Farbe des von den Leuchtmitteln abgegebenen Lichtes erkennen, welche Temperatur in dem Gerät herrscht. Denkbar ist es, dass mehrere Kompartimente vorgesehen sind, und dass der Nutzer anhand der Beleuchtungsfarbe des Kompartimentes erkennen kann, welche Temperatur in welchem Kompartiment herrscht.

Es erfolgt somit eine Anzeige der Temperatur durch die Farbgebung von Leuchtmitteln.

In bevorzugter Ausgestaltung der Erfindung ist vorgesehen, dass die Leuchtmittel im Innenraum des Kompartimentes angeordnet sind. Denkbar ist es somit, dass in jedem der Kompartimente bzw. in dem Kompartiment ein oder mehrere Leuchtmittel vorgesehen sind, die eine von der gemessenen Temperatur abhängige Farbe abgeben. Die Leuchtmittel können beispielsweise als eine oder mehrere herkömmliche Glühbirnen, LEDs, Leuchtfolien etc. ausgeführt sein.

Denkbar ist es, dass der Leuchtkörper der Leuchtmittel derart ausgeführt ist, dass er das abgegebene Licht je nach der gemessenen Temperatur ändern kann. Denkbar ist es ferner, dass jeweils mehrere Leuchtmittel unterschiedlicher Farbe vorgesehen sind, von denen das aktiviert wird, dessen Lichtfarbe für die gemessene Temperatur repräsentativ ist.

Die Leuchtmittel können derart angeordnet und ausgeführt sein, dass sie zur Ausleuchtung des Kompartimentes dienen. In diesem Fall dienen die Leuchtmittel somit zur Beleuchtung des jeweiligen Kompartimentes bzw. der darin befindlichen Güter, wie dies bei aus dem Stand der Technik bekannten Geräten bekannt ist, die üblicherweise weißes Licht abgebende Glühlampen zur Beleuchtung des jeweiligen Kompartimentes aufweisen. Auch ist es denkbar, dass eine transparente Scheibe, wie z. B. eine Glasscheibe oder Kunststoffscheibe durch in oder an dem Rahmen befindliche Leuchtmittel beleuchtet wird. Möglich ist es, die Scheibe einer Tür oder eines Deckels zu beleuchten.

Denkbar ist jedoch auch, dass die Leuchtmittel derart angeordnet und ausgeführt sind, dass sie ein von der gemessenen Temperatur abhängiges oder für dieses charakteristisches Licht abgeben, das jedoch nicht zur Ausleuchtung des Kompartimentes dient. Möglich wäre somit eine Leuchtanzeige, beispielsweise in Form eines Leuchtpunktes oder Leuchtfeldes, an einer bestimmten für den Nutzer gut einsehbaren Position, wobei der Nutzer anhand der Farbe der Leuchtanzeige erkennen kann, welche Temperatur herrscht. In diesem Fall dienen die Leuchtmittel somit nur zur Anzeige der Temperatur, nicht jedoch zur Beleuchtung des jeweiligen Kompartimentes bzw. des darin befindlichen Gutes.

Alternativ oder zusätzlich zur Anordnung der Leuchtmittel im Innenraum des Kompartimentes können die Leuchtmittel an der Außenseite des Gerätes angeordnet oder von außen sichtbar sein. Denkbar wäre es beispielsweise die Leuchtmittel in der Tür des Gerätes vorzusehen. Unter "Außenseite" ist auch der Fall umfaßt, dass die Leuchtmittel beispielsweise an der Frontseite des Korpus angeordnet sind. Sie können beispielsweise derart angeordnet sein, dass sie durch eine Aussparung oder durch ein Fenster hindurch sichtbar sind.

Wie oben ausgeführt, kann es sich bei den Leuchtmitteln um herkömmliche Glühlampen oder um LEDs oder beispielsweise auch um Leuchtfolien handeln. Von der Erfindung ist der Fall umfaßt, dass die Leuchtkörper selbst unterschiedliche, von der Temperatur abhängige Farben abgeben sowie auch der Fall, dass die Leuchtkörper als solche stets die gleiche Farbe erzeugen, diesen jedoch ein Lichtfilter oder dergleichen zugeordnet ist, der für den Nutzer nur das Licht hindurchlässt, dass für die gemessene Temperatur charakteristisch ist. Denkbar wäre beispielsweise eine drehbare, vor dem Leuchtkörper angeordnete Scheibe, die transluzent ist und unterschiedliche Farben bzw. Farbfelder aufweist.

In weiterer Ausgestaltung der Erfindung ist vorgesehen, dass das Gerät zwei oder mehr als zwei Kompartimente aufweist und dass jedem der Kompartimente Leuchtmittel zugeordnet sind, die Licht in einer Farbe abgeben, die von der in dem jeweiligen Kompartiment gemessenen Temperatur abhängig ist.

So ist es beispielsweise denkbar, dass das Gerät ein Kühlfach sowie ein Kaltlagerfach aufweist, in denen jeweils die Temperatur gemessen wird, und dass dem Kühlfach und dem Kaltlagerfach jeweils wenigstens ein Leuchtmittel zugeordnet ist, dass Licht in einer Farbe abgibt, das von der jeweils gemessenen Temperatur abhängig ist.

Weiterhin kann vorgesehen sein, dass wenigstens ein Kompartiment vorgesehen ist, in dem wenigstens zwei an unterschiedlichen Orten angeordnete Erfassungspunkte für die Temperatur, wie beispielsweise Temperatursensoren sowie wenigstens zwei diesen räumlich zugeordnete Leuchtmittel angeordnet sind. Auf diese Weise ist dem Nutzer möglich, anhand der Farbe des von den Leuchtmitteln abgegebenen Lichtes die Temperaturverteilung innerhalb eines Kompartimentes zu erfassen.

Ist die Farbe des Lichtes im unteren Teil eines Kühlfaches beispielsweise blau und in einem weiter oben angeordneten Teil des Kühlfaches beispielsweise grün, kann der Nutzer erkennen, dass (und ggf. welcher) innerhalb eines Kompartimentes ein Temperaturgradient herrscht und davon abhängig sein Kühl- bzw. Gefriergut positionieren.

Um ein möglichst großes Spektrum von Farben zur Verfügung zu haben, die Temperaturwerte charakterisieren, kann vorgesehen sein, dass die durch die Leuchtmittel erzeugbaren Farben das gesamte sichtbare Spektrum des Lichtes umfassen.

Denkbar ist es, dass die Leuchtmittel derart ausgeführt sind, dass die Wellenlänge des Lichtes um so kleiner ist, je geringer die gemessene Temperatur ist. So kann beispielsweise vorgesehen sein, dass blaues Licht eine geringere Temperatur signalisiert als beispielsweise oranges Licht.

In weiterer Ausgestaltung der Erfindung ist vorgesehen, dass die Leuchtmittel abgeschaltet sind, wenn die Tür bzw. der Deckel bzw. ein Auszug des Gerätes geschlossen ist. Alternativ dazu ist es denkbar, dass sich die Leuchtmittel immer in Betrieb sind, was insbesondere dann von Vorteil ist, wenn die Leuchtmittel von außen, also nicht nur bei geöffneter Tür oder bei geöffnetem Deckel oder bei geöffnetem Auszug sichtbar sind.

Es können durch den Nutzer einsehbare Mittel vorgesehen sein, die eine Zuordnung der Farbe des durch die Leuchtmittel abgegebenen Lichtes zu der gemessenen Temperatur aufweisen. Denkbar ist beispielsweise eine Tabelle oder dergleichen, anhand derer der Nutzer ablesen kann, welche Lichtfarbe für welche Temperatur steht. Aufgrund dieser Zuordnung ist es für den Nutzer möglich, einen Temperaturwert oder zumindest einen Temperaturwertbereich zu ermitteln.

Des Weiteren können Einstellmittel für eine Vorgabe der Solltemperatur für den Nutzer aufweisen, die Ziffern, farbige Symbole oder ihrerseits Leuchtmittel aufweisen, die Licht in Abhängigkeit der Solltemperatur abgeben.

Damit für den Nutzer feststellbar ist, ob der von ihm eingestellte Sollwert erreicht ist, kann vorgesehen sein, dass nicht nur Leuchtmittel vorgesehen sind, die Licht in einer von dem Temperaturistwert abhängigen oder für diesen charakteristischen Lichtfarbe abgeben, sondern dass des Weiteren Leuchtmittel vorgesehen sind, die Licht in einer von dem Temperatursollwert abhängigen oder für diesen charakteristischen Lichtfarbe abgeben. Der Nutzer kann somit einfach durch Vergleich der beiden Farben feststellen, ob in dem Kompartiment des Gerätes die gewünschte Temperatur herrscht.

Bei den Leuchtmitteln, die Licht in einer von dem gemessenen Temperaturwert abhängigen Farbe abgeben und bei dem Leuchtmitteln, die Licht in einer von dem Temperatursollwert abhängigen Farbe abgeben, kann es sich um unterschiedliche oder um ein und dieselben Leuchtmittel handeln. Im letzteren Falle kann durch den Nutzer wählbar bzw. umschaltbar sein, welches Licht abgegeben werden soll.

Weiterhin kann vorgesehen sein, dass das Gerät zusätzlich zu den Leuchtmitteln eine Anzeigevorrichtung, wie z. B. ein Display aufweist, in dem die gemessene Temperatur numerisch angezeigt wird.

Weiterhin ist es denkbar, dass die Zuordnung der Farbe der Beleuchtung zum Temperaturist- oder -sollwert durch den Nutzer einstellbar ist.

Weitere Einzelheiten und Vorteile der Erfindung werden anhand eines im Folgenden beschriebenen Ausführungsbeispiels näher erläutert:

Das Ausführungsbeispiel betrifft ein Kühl- und Gefriergerät mit einem Kühlfach, einem Kaltlagerfach sowie einem Gefrierfach. In jedem dieser Kompartimente sind ein oder mehrere Temperatursensoren angeordnet, die von der darin herrschenden Temperatur abhängigen Werte ermitteln. Die Temperatursensoren stehen mit einer Steuereinrichtung in Verbindung, die ihrerseits mit Leuchtmitteln in Verbindung stehen und diese dahingehend ansteuern, welche Farbe das von den Leuchtmittel abzugebendes Licht hat.

Die Steuereinrichtung ordnet einem gemessenen Temperaturistwert eine bestimmte Lichtfarbe zu und steuert sodann die Leuchtmittel derart an, dass dieses Licht in der seitens der Steuereinrichtung ermittelten Lichtfarbe abgeben.

Wird beispielsweise im Gefrierfach eine Temperatur von - 18°C, im Kaltlagerfach von 0 °C und im Kühlfach von 8°C gemessen, veranlaßt die Steuereinrichtung, dass die dem Gefrierfach zugeordneten Leuchtmittel blaues Licht, die dem Kaltlagerfach zugeordneten Leuchtmittel grünes Licht und die dem Kühlfach zugeordneten Leuchtmittel oranges Licht abgeben.

Dieses Licht kann beispielweise in Form einer Leuchtanzeige ausgeführt sein, der nicht die Aufgabe der Beleuchtung des jeweiligen Kompartimentes zukommt. Die eigentlich Beleuchtung des Faches könnte in diesem Fall beispielweise immer durch weißes Licht erfolgen. Alternativ oder zusätzlich ist denkbar, dass die Leuchtmittel die Aufgabe haben, das Kompartiment in der jeweils für die Temperatur charakteristischen Farbe teilweise oder vollständig auszuleuchten.

Alternativ oder zusätzlich dazu ist es denkbar, dass die Beleuchtung sich nicht oder nicht nur auf den Innenraum des oder der Kompartimente bezieht, sondern auch von außen sichtbar ist bzw. eine Beleuchtung der Geräteaußenseite umfaßt. So kann beispielsweise vorgesehen sein, dass von außen, d.h. bei geschlossener Tür oder Klappe sichtbare Teile, wie beispielsweise Griffe des oder der Kompartimente in der Farbe beleuchtet werden, die von der in dem jeweiligen Kompartiment herrschenden Temperatur abhängig bzw. für diesen charakteristisch ist.

Die Einstellung des Temperatursollwertes kann durch den Nutzer wie bei bekannten Geräten beispielsweise durch Betätigung eines Stellmittels, wie beispielsweise eine Stellrades oder durch Eingabe eines Wertes erfolgen. Das Stellmittel kann beispielsweise Zahlen oder sonstige Symbole aufweisen, die für den Temperatursollwert charakteristisch sind. Auch ist es möglich dass an dem Stellmittel oder an anderer Stelle Leuchtmittel vorgesehen sind, die Licht in einer von dem Temperatursollwert abhängigen Farbe abgeben. In diesem Fall kann der Nutzer durch Vergleich zweier Lichtfarben gleich erkennen, ob in dem Kompartiment die gewünschte Temperatur herrscht.

## Patentansprüche

1. Kühl- und/oder Gefriergerät mit einem oder mehreren Kompartimenten zur Aufnahme von Kühl- oder Gefriergut, wobei wenigstens ein Temperatursensor vorgesehen ist, mittels dessen die Temperatur in dem wenigstens einen Kompartiment erfaßt wird, **dadurch gekennzeichnet, dass** wenigstens ein Leuchtmittel vorgesehen ist, das mit dem wenigstens einen Temperatursensor derart unmittelbar oder mittelbar miteinander in Verbindung steht, dass das Leuchtmittel Licht in einer Farbe abgibt, die von der durch den wenigstens einen Temperatursensor erfaßte Temperatur abhängig ist.

2. Kühl- und/oder Gefriergerät nach Anspruch 1, **dadurch gekennzeichnet, dass** die Leuchtmittel im Innenraum des Kompartimentes angeordnet sind.

3. Kühl- und/oder Gefriergerät nach Anspruch 1 oder 2, **dadurch gekennzeichnet, dass** die Leuchtmittel derart angeordnet und ausgeführt sind, dass sie zur Ausleuchtung des Kompartimentes und/oder zur Beleuchtung einer transparenten Scheibe durch den Rahmen dienen.

4. Kühl- und/oder Gefriergerät nach Anspruch 1 oder 2, **dadurch gekennzeichnet**, das die Leuchtmittel derart angeordnet und ausgeführt sind, dass sie ein von der gemessenen Temperatur abhängiges Licht abgeben, das jedoch nicht zur Ausleuchtung des Kompartimentes dient.

5. Kühl- und/oder Gefriergerät nach einem der vorhergehenden Ansprüche, **dadurch gekennzeichnet**, die Leuchtmittel an der Außenseite des Gerätes oder derart angeordnet sind, so dass sie auch bei geschlossener Tür oder Klappe oder Auszug durch einen Nutzer sichtbar sind.

6. Kühl- und/oder Gefriergerät nach einem der vorhergehenden Ansprüche, **dadurch gekennzeichnet, dass** es sich bei den Leuchtmitteln um herkömmliche Glühlampen, um Leuchtfolien oder um LEDs handelt.

7. Kühl- und/oder Gefriergerät nach einem der vorhergehenden Ansprüche, **dadurch gekennzeichnet, dass** das Gerät zwei oder mehr als zwei Kompartimente aufweist und dass jedem der Kompartimente Leuchtmittel zugeordnet sind, die Licht in einer Farbe abgeben, die von der in dem jeweiligen Kompartiment gemessenen Temperatur abhängig ist.

8. Kühl- und/oder Gefriergerät nach einem der vorhergehenden Ansprüche, **dadurch gekennzeichnet, dass** wenigstens ein Kompartiment vorgesehen ist, in dem wenigstens zwei Erfassungspunkte für die Temperatur sowie wenigstens zwei diesen zugeordnete Leuchtmittel angeordnet sind.

9. Kühl- und/oder Gefriergerät nach einem der vorhergehenden Ansprüche, **dadurch gekennzeichnet, dass** die durch die Leuchtmittel erzeugbaren Farben das gesamte sichtbare Spektrum des Lichtes umfassen.

10. Kühl- und/oder Gefriergerät nach einem der vorhergehenden Ansprüche, **dadurch gekennzeichnet, dass** die Leuchtmittel derart ausgeführt sind, dass die Wellenlänge des Lichtes um so kleiner ist, je geringer die gemessene Temperatur ist.

11. Kühl- und/oder Gefriergerät nach einem der vorhergehenden Ansprüche, **dadurch gekennzeichnet, dass** die Leuchtmittel abgeschaltet sind, wenn die Tür bzw. der Deckel bzw. der Auszug des Gerätes geschlossen ist.

12. Kühl- und/oder Gefriergerät nach einem der vorhergehenden Ansprüche, **dadurch gekennzeichnet, dass** durch den Nutzer einsehbare Mittel vorgesehen sind, die eine Zuordnung der Farbe des durch die Leuchtmittel abgegebenen Lichtes zu der gemessenen Temperatur ermöglichen.

13. Kühl- und/oder Gefriergerät nach einem der vorhergehenden Ansprüche, **dadurch gekennzeichnet, dass** Leuchtmittel vorgesehen sind, die Licht in einer von dem Temperatursollwert abhängigen Lichtfarbe abgeben.

14. Kühl- und/oder Gefriergerät nach einem der vorhergehenden Ansprüche, **dadurch gekennzeichnet, dass** die Leuchtmittel durch den Nutzer dahingehend umschaltbar sind, dass sie Licht in einer von dem Temperaturistwert oder in einer von dem Temperatursollwert abhängigen Farbe abgeben.

15. Kühl- und/oder Gefriergerät nach einem der vorhergehenden Ansprüche, **dadurch gekennzeichnet, dass** das Gerät zusätzlich zu den Leuchtmitteln eine Anzeigevorrichtung aufweist, in dem die gemessene Temperatur in Form eines Wertes angezeigt wird und/oder dass die Zuordnung der Farbe zu einem Temperaturistwert und/oder -sollwert durch den Nutzer einstellbar ist.
